**Europäisches Patentamt**

**European Patent Office**

**Office européen des brevets**

(11) Veröffentlichungsnummer: **0 196 507**
**B1**

## (12) EUROPÄISCHE PATENTSCHRIFT

(45) Veröffentlichungstag der Patentschrift:
**13.09.89**

(21) Anmeldenummer: **86103268.8**

(22) Anmeldetag: **11.03.86**

(51) Int. Cl.⁴: **B01D 33/04, B01D 37/02**

(54) Verfahren zur Betriebsführung und Betriebsoptimierung einer Siebbandpresse zum Filtern von Trüben.

(30) Priorität: **18.03.85  CH 1224/85**

(43) Veröffentlichungstag der Anmeldung:
**08.10.86 Patentblatt 86/41**

(45) Bekanntmachung des Hinweises auf die Patenterteilung:
**13.09.89 Patentblatt 89/37**

(84) Benannte Vertragsstaaten:
**AT CH DE FR GB IT LI NL**

(56) Entgegenhaltungen:
**DE-A- 3 142 389**
**DE-A- 3 300 249**
**GB-A- 2 035 617**
**GB-A- 2 069 858**

**Die Akte enthält technische Angaben, die nach dem Eingang der Anmeldung eingereicht wurden und die nicht in dieser Patentschrift enthalten sind.**

(73) Patentinhaber: **VON ROLL AG, CH-4563 Gerlafingen(CH)**

(72) Erfinder: **Kistler, François, Jurastrasse 18,**
**CH-4562 Biberist(CH)**

(74) Vertreter: **EGLI-EUROPEAN PATENT ATTORNEYS,**
**Horneggstrasse 4, CH-8008 Zürich(CH)**

## Beschreibung

Die Erfindung betrifft ein Verfahren zur Betriebsführung einer Siebbandpresse zum Filtern einer Trübe, insbesondere von Schlamm, mit zwei übereinander geführten Siebbändern, von denen durch das untere Siebband eine Seihzone und daran anschliessend durch beide Siebbänder eine Presszone gebildet werden, wobei der Antrieb der Siebbänder, der Zufluss der Trübe, die Flockungsmittelzugabe und die Bandspannung sowie der Siebbandliniendruck einstellbar und/oder regelbar ausgebildet werden.

Ein solches Verfahren ist beispielsweise aus der DE OS 3 303 967 bekannt. Dort ist eine Siebbandpresse beschrieben, bei welcher zwei miteinander synchronlaufende Siebbänder angeordnet sind, von denen das Unterband den Boden eines Einlauftrichters bildet. Durch das Abfliessen von Filtrat bildet sich auf dem Unterband ein Filterkuchen, der beim Durchlauf durch die Presse ausgepresst wird. An einem Austritt werden die Siebbänder wieder voneinander getrennt und vom Filterkuchen befreit. Siebbänder werden mit stufenlos einstellbarer Bandgeschwindigkeit betrieben. Auch die Bandspannung ist einstellbar und zudem wird das Niveau der Trübe im Einlauftrichter überwacht.

Verfahren, nach denen die Betriebsbedingungen einer Siebbandpresse eingestellt und auch geregelt werden können, sind in verschiedenen Ausführungsformen bekannt. Bei einer bekannten Ausführungsform (DE-PS 2 932 938) werden zwei unabhängige Regelkreise, ein Schlammdurchsatz-Regelkreis mit einer regelbaren Schlammpumpe, einem Niveaugeber und einem Durchflussmengenmesser einerseits und ein Flockungsmittel-Regelkreis mit einer regelbaren Flockungsmittelpumpe, einem Geber für den Entwässerungszustand des Filterkuchens durch Messen des seitlichen Austretens desselben in der Presszone und einem Flockungsmittelmengenmesser andererseits, vorgesehen. Ist eine bestimmte Siebbandgeschwindigkeit eingestellt, wird der Schlammdurchsatz und der Flockungsmittelzufluss durch diese beiden Regelkreise geregelt. Die Qualität dieser Regelung hängt von der Messung des Entwässerungszustandes, d. h. der Scherfestigkeit des Filterkuchens ab, die aber sprunghaft ändern und deshalb eine fehlerhafte Istwert-Messung zur Folge haben kann. Eine Optimierung der Betriebsführung der Siebbandpresse ist deshalb schwierig zu erreichen.

Während bei dieser bekannten Ausführungsform eine selbsttätige Anpassung an verschiedene Trüben mit veränderlichen Entwässerungseigenschaften nicht vorgesehen ist, wird dies bei einer weiteren bekannten Ausführungsform (DE-OS 33 00 249) angestrebt. Es werden hier ebenfalls unabhängige Regelkreise vorgesehen, wobei für den Flockungsmittel-Regelkreise die in der Seihzone frei abfliessende Filtratmenge als Führungsgrösse verwendet wird. Damit wird zwar die schwierig zu messende Scherfestigkeit des Filterkuchens durch einen kontinuierlich ändernden und deshalb leichter zu messenden Istwert ersetzt. Grundsätzlich wird jedoch als Führungsgrösse für den Flockungsmittel-Regelkreis nur ein anderer Istwert bzw. Messwert, in diesem Fall ein Messwert des Filtrates anstelle eines Messwertes des Filterkuchens verwendet. Sobald sich jedoch die Zusammensetzung der Trübe ändert, muss auch der Sollwert des Flockungsmittel-Regelkreises geändert werden, soll die Siebbandpresse optimal betrieben werden. Diese Optimierung soll durch die Berücksichtigung zusätzlicher Parameter, z.B. der Konsistenz der Trübe erreicht werden, aber die Regelung wird dadurch entsprechend aufwendiger.

Hier setzt die Erfindung ein, der die Aufgabe zugrundeliegt, ein Verfahren der eingangs beschriebenen Art so auszugestalten, dass die Optimierung der Betriebsführung der Siebband presse mit vergleichsweise geringem Aufwand an Regelungsmittel und grösserer Genauigkeit erreicht wird.

Diese Aufgabe wird gemäss der Erfindung dadurch gelöst, dass für die Optimierung des Trockenstoffgehaltes des Filterkuchens und des Flockungsmittelzuflusses die Flockungsmittelmenge im Ueberflockungsbereich nur soweit verringert wird, dass das Niveau der Trübe am Anfang der Seihzone noch stabilisiert wird.

Zweckmässig kann hierbei zur Betriebsoptimierung der Siebbandpresse die Optimierung des Flockungsmittelzuflusses durch den Flockungsmittelkreis mit der Optimierung eines oder mehrerer der Grössen:Siebbandgeschwindigkeit, Siebbandspannung und Siebbandliniendruck kombiniert werden.

Die Erfindung ist beispielsweise in der Zeichnung dargestellt und nachfolgend anhand der Figuren beschrieben. Es zeigen:

Fig. 1 eine schematische Darstellung einer Siebbandpresse,

Fig. 2 die Beziehung zwischen der Flockungsmittelkonzentration (Flockungsmittelzufluss:Trübenzufluss) und dem Trockenstoffgehalt,

Fig. 3 die Darstellung des stabilen Arbeitsbereiches einer Siebbandpresse in dem Diagramm nach Fig. 2,

Fig. 4 die Summe des aus der Seihzone und der Presszone aufliessenden Filtrats in Funktion der Zeit,

Fig. 5 die Summe des ausfliessenden Filtrats in Funktion der Stärke des Filterkuchens,

Fig. 6 die Filtratmenge in Funktion der Bandgeschwindigkeit der Siebbandpresse und

Fig. 7 die Filtratmenge in Funktion der Bandspannung und/oder des Siebbandliniendruckes.

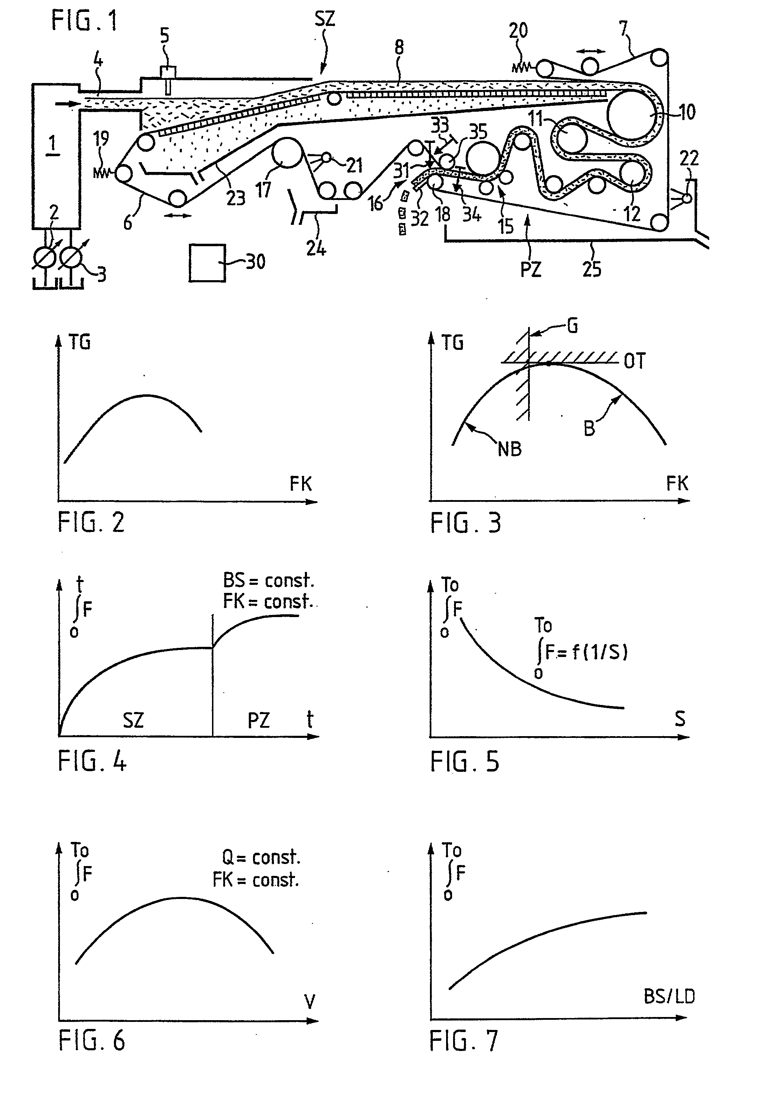

Die Erfindung bezieht sich auf eine Siebbandpresse, wie sie schematisch in Fig. 1 dargestellt ist. Sie ist in einem nicht dargestellten Maschinenrahmen eingebaut und weist einen Mischbehälter 1 auf, in den eine regelbare Pumpe 2 eine Trübe, insbesondere einen Schlamm, und eine weitere regelbare Pumpe 3 ein Flockungsmittel fördert. Bei Verwendung mehrerer Flockungsmittel werden mehrere Pumpen 3 eingesetzt und aufeinander abgestimmt. Der Zufluss von Trübe und Flockungsmittel gelangt über eine Zuleitung 4 in die Seihzone SZ der Bandfilterpresse. Die Seihzone SZ weist zuleitungsseitig einen Sensor 5 für die Messung der Niveauhöhe und ihrer zeitlichen Aenderung auf. Der Sensor 5 ist ein Teil eines Regelkreises zur Regelung des Zuflusses der Trübe und des Flockungsmittels.

Die Siebbandpresse weist zwei gleichsinnig umlaufende Siebbänder auf, von denen das eine, als Unterband bezeichnete Band 6 den Boden der Seihzone SZ bildet und das andere, als Oberband bezeichnete Band 7 mit diesem zusammenwirkt.

Die Seihzone SZ kann in verschiedener Weise ausgebildet sein, siehe z.B. DE-OS 31 42 389. Durch das den Boden der Seihzone SZ bildende Band 6 fliesst aus der Trübe Filtrat ab und es bildet sich darauf ein Filterkuchen 8. Anschliessend gelangt der Filterkuchen 8 in eine durch die beiden Siebbänder 6, 7 gebildete Keilzone, die anschliessend in eine Presszone PZ übergeht, in welcher der Filterkuchen einem zunehmenden Druck unterliegt und bei der Umlenkung um Walzen, 10, 11, 12 und nach Führung über weitere Walzen in einer Hochdruckzone 15 zunehmend ausgepresst wird. Anschliessend werden die Siebbänder 6, 7 an einer Austrittsstelle 16 voneinander getrennt, wobei der Filterkuchen von den Siebbändern 6, 7 gelöst wird.

Die beiden Siebbänder 6, 7 werden durch je einen Antrieb (nicht dargestellt) über zwei gummierte Walzen 17, 18 angetrieben, wobei die Bandgeschwindigkeit stufenlos bis zu einem durch die Anlage gegebenen Höchstwert einstellbar ist.

Zum Spannen der Siebbänder 6, 7 sind Bandspannvorrichtungen 19, 20 vorgesehen, mit denen die Bandspannung der beiden Bänder stufenlos einstellbar ist, während die Einstellung der Linienoder Quetschdruckes durch die Einstellung des Pressdruckes zweier zusammenwirkender Walzen, z.B. wie in der Hochdruckzone 15, durch beidseits der Bänder gegenüberliegende Walzen erfolgt.

Die Siebbänder 6, 7 müssen dauernd gereinigt werden. Hierzu dient je eine Bandwaschanlage 21, 22 für jedes Siebband. Das aus der Seihzone SZ und der Presszone PZ anfallende Filtrat und das aus den Bandwaschanlagen 21, 22 anfallende Waschwasser werden in Wannen 23, 24, 25 gesammelt und gemeinsam oder getrennt abgeführt. Weitere in Fig. 1 dargestellte, jedoch nicht bezeichnete Rollen dienen der Führung und dem Geradelauf der beiden Siebbänder 6, 7.

Für die automatische Betriebsführung der in Fig. 1 beschriebenen Siebbandpresse sind verschiedene Regeleinrichtungen vorgesehen, die zweckmässig über einen Prozessor 30 programmiert und gesteuert werden. In diesen laufen die Steuerleitungen zusammen, die in Fig. 1 der besseren Uebersicht wegen nicht eingezeichnet sind und Verbindungen zu den regelbaren Pumpen 2, 3, dem Niveausensor 5, den Antrieben 17, 18 für die Siebbänder 6, 7, dem Messkopf 31 einer Einrichtung zur Messung des Trockenstoffgehaltes des Filterkuchens an der Austrittsstelle 16 des Filterkuchens aus den Siebbändern und einer Einrichtung 33, 34 zur Messung der Reinheit des Filtrats nach der Austrittsstelle 16 darstellen.

Mit der beschriebenen Siebbandpresse können verschiedene Einsatzziele erreicht werden, z.B.

ein hoher Trockenstoffgehalt, eine günstige Wirtschaftlichkeit oder eine hohe Durchsatzleistung, selbstverständlich unter Einhaltung einer vorgeschriebenen Reinheit es Filtrates.

Zwischen der Flockungsmittelkonzentration FK und dem Trockenstoffgehalt TG besteht die in Fig. 2 dargestellte Beziehung. Die Reduktion der Flockungsmittttelkonzentration FK führt bei einer Siebbandpresse zu einer Erhöhung des Niveaus am Anfang der Seihzone SZ. Ist die Qualität und der Durchsatz der Trübe sowie die Flockungsmittelkonzentration FK gegeben, stabilisiert sich das Niveau auf einer bestimmten Höhe. Unterschreitet die Flockungsmittelkonzentration FK eine bestimmte Grenze, siehe die Linien G in Fig. 3, kann sich das Niveau nicht mehr stabilisieren; die Siebbandpresse entwässert nicht mehr genug in der Seihzone SZ und es kommt zum Ueberlaufen.

Die Erfindung geht nun von der Ueberlegung aus, dass diese maschinengebundene Grenze G in ganz bestimmter Weise mit dem Trockenstoffgehalt TG des Filterkuchens zusammenhängt. Versuche an Siebbandpressen haben überraschend ergeben, dass die Grenze G sehr nahe an dem optimalen Trockenstoffgehalt OT liegt. Dies ist in Fig. 3 dargestellt. Rechts der mit G bezeichneten Grenze liegt der für den praktischen Bertrieb benützbare Bereich B, in dem sich das Niveau der Seihzone SZ stabilisieren kann, und links davon der für die praktische Betriebsführung ungünstige Bereich NB.

Durch diese Feststellung kann die Optimierung des Trockenstoffgehaltes und des Flockungsmittelzuflusses in Funktion der Flockungsmittelkonzentration durch eine Niveaumessung am Anfang der Seihzone SZ verwirklicht werden. Dabei ist die Messung der zeitlichen Entwicklung des Niveaus von besonderem Wert und weniger die Messung eines absoluten Niveaus, um diese Optimierung zu verwirklichen.

In Fig. 4 ist die Summe des aus der Seihzone SZ und der Presszone PZ ausfliessenden Filtrats über der Zeit dargestellt. Der Ausfluss verläuft zeitlich wie eine logarithmische Funktion. Hierbei sind die Bandspannung BS und die Flockungsmittelkonzentration FK als konstant angenommen. Je länger demnach das Band einer Siebbandpresse läuft, desto mehr Filtrat fliesst aus der Trübe aus, und dementsprechend wird der Trockenstoffgehalt umso höher.

In Fig. 5 ist die Summe des aus der Seih- und Presszone ausfliessenden Filtrats in Funktion der Stärke des Filterkuchens dargestellt. Je schneller demnach das Band einer Siebbandpresse läuft, desto dünner wird der Kuchen (bei konstantem Durchsatz) und desto besser ist die Entwässerung.

Die Funktionen nach Fig. 4 und 5 verhalten sich umgekehrt. Es kann demnach daraus eine optimale Bandgeschwindigkeit ermittelt werden, die eine optimale Entwässerung ermöglicht, siehe Fig. 6, in der das ausfliessende Filtrat F über der Bandgeschwindigkeit V dargestellt ist, wobei der Durchsatz Q und die Flockungsmittelkonzentration FK als konstant angenommen sind.

Demnach bedingt die Optimierung des Trockenstoffgehaltes TG in Bezug auf die Bandegeschwindigkeit eine Messung dieses Gehaltes im Filterkuchen und kann nicht einfach durch Fahren bis zu einem Grenzwert wie bei eindeutigen Funktiionen verwirklicht werden.

Zur Messung des Trockenstoffgehaltes TG wird das an sich bekannte spektrometrische Verfahren mit Infrarot verwendet. Damit jedoch dieses Verfahren anwendbar ist, muss die Austrittsstelle 16 der Siebbänder in besonderer Weise ausgebildet sein, wie dies in Fig. 1 schematisch dargestellt ist. An der Austrittsstelle 16 sind die beiden, die Austrittsstelle bildenden Umlenkrollen für die Siebbänder, d.h. die obere Rolle 35 und die untere Antriebsrolle 18 gegeneinander versetzt, so dass der Messkopf 31 des Spektrometers möglichst senkrecht auf den Filterkuchen strahlen kann. Zudem müssen an den Rollen 18, 35 Mittel angordnet werden, die den Filterkuchen vom oberen Band lösen und ihn auf dem unteren Band zu bleiben zwingen. Weiter muss vermieden werden, dass der Filterkuchen zu früh abreisst. Das Lösen vom oberen Band und das Vermeiden des Abreissens kann durch Leitbleche erreicht werden, von denen an der untern Rolle 18 ein Schaber 32 schematisch angedeutet ist. Ein ähnlicher Schaber (nicht dargestellt) kann auch an der oberen Rolle 35 angeordnet werden. Soll bei bestehenden Siebbandpressen der Trockenstoffgehalt nach dem beschriebenen Verfahren gemessen werden, kann die versetzte Lage der Rollen 18, 35 gegebenfalls nicht vorgesehen werden. Aber auch in diesem Fall kann die Messstelle so ausgebildet werden, dass der Filterkuchen vollständig auf dem unteren Band verbleibt und der Messkopf so angeordnet werden kann, dass er annähernd senkrecht auf die Oberfläche des Filterkuchens strahlen kann.

Ein weiterer Parameter, der für die Optimierung der Betriebsführung einer Siebbandpresse herangezogen werden kann, ist die Bandspannung und der Liniendruck. Für die Einstellung der Bandspannung dienen die in Fig. 1 dargestellten Bandspannvorrichtungen 19, 20, während für die Einstellung des Liniendruckes einzelne oder mehrere Pressrollen der Presszone PZ, z.B in der Hochdruckzone 15, siehe Fig. 1, in ihrem Abstand zur Gegenrolle eingestellt werden. Diese beiden Funktionen sind eindeutig, denn je grösser die Bandspannung und/oder der Liniendruck sind, desto besser ist die Entwässerung. die Grenzen sind maschinenbedingt oder durch das seitliche Ausfliessen des Filterkuchens oder durch die Reinheit des Filtrats bedingt.

Das Ausfliessen des Filterkuchens seitlich aus den Bändern soll grundsätzlich vermieden werden, weshalb die zum Ausfliessen führende Ausbreitung des Filterkuchens vor dem Ausfliessen festgestellt werden kann. Hierzu wird ein am Rand eines Bandes senkrecht auf das Band wirkender Taster angeordnet, der mit einem bestimmten Vordruck auf den Rand des Bandes drückt. Breitet sich der Filterkuchen aus, wird das Band durch den grösseren Innendruck angehoben, wodurch im Taster ein Signal erzeugt wird. Die Verwendung eines Tasters ist für diese Messung vorteilhaft, da der Taster einfach und wasserdicht hergestellt werden kann. Zudem kann die Messung an dem Band ausgeführt werden, wodurch sie einfacher wird als wenn eine Berührung mit dem Filterkuchen festgestellt werden muss. Aus den vorstehenden Ausführungen kann die Optimierung der Betriebsführung der Siebbandpresse bezüglich der Optimierung des Trockenstoffgehaltes TG wie folgt durchgeführt werden:

1) Die Flockungsmittelkonzentration wird durch den rasch reagierenden Flockenmittelkreis durch die Niveaumessung am Anfang der Seihzone SZ gemäss Fig. 3 optimiert. Hierbei kann die beschriebene Bestimmung des Trockenstoffgehaltes als Kontrollfunktion eingesetzt werden.

2) Die rasch reagierenden Optimierungskreise der Bandspannung und des Liniendruckes werden bis zu einer der vorstehend erwähnten Grenzen eingestellt.

3) Die Bandgeschwindigkeit wird mit der beschriebenen Messung des Trockenstoffgehaltes optimiert. Dies ist der trägste Kreis, da die Messung des Trockenstoffgehaltes erst am Schluss der Siebbandpresse stattfindet.

Während 1) unabhängig funktioniert, können 2) und 3) nur in einer Sequenz stattfinden.

Soll anstelle eines optimalen Trockenstoffgehaltes eine optimale Wirtschaftlichkeit der Betriebsführung der Siebbandpresse erreicht werden, kann von der vereinfachenden Annahme ausgegangen werden, dass die Betriebskosten praktisch nur durch den Verbrauch an Flockungsmitteln bedingt sind, da die Einflüsse auf die Kosten, die durch Verstellarbeiten entstehen, vernachlässigt werden können.

Der gefundene Zusammenhang zwischen Trockenstoffgehalt und Flockungsmittelkonzentration bedeutet demnach, dass die Optimierung der Wirtschaftlichkeit gleich wie die Optimierung des Trockenstoffgehaltes durchgeführt werden kann.

Nachdem die verschiedenen Parameter der Siebbandpresse und deren Verhalten beschrieben sind, können auch andere Optimierungen der Betriebsführung der Siebbandpresse ohne Schwierigkeit, z.B. mit dem Iterationsverfahren, erreicht werden, z.B. zum Erreichen eines optimalen Durchsatzes.

Für den Durchsatz hat man zwischen zwei Optimierungsarten zu unterscheiden, d.h. zwischen Durchsatz bei minimalen Kosten und maximalem Durchsatz. Im ersten Fall wird der Durchsatz soweit erhöht, bis der Kuchen seitlich ausfliesst. Falls der gewählte Grenzwert für den Trockenstoffgehalt nicht unterschritten wird, werden mit einem Iterationsschritt die Bandspannung und der Liniendruck verringert, die Bandgeschwindigkeit aber erhöht. Dann beginnt man wieder mit der Erhöhung des Durchsatzes. Im zweiten Fall wird nach dem erwähnten Iterationsschritt mit mehr Flockungsmittel gefahren, und dann wieder mit der Erhöhung des Durchsatzes begonnen.

Bei den Versuchen, die zu den in Fig. 3 dargestellten Ergebnissen geführt haben, wurde festgestellt, dass je ausgeprägter die Ueberflockung ist (Bereich rechts der Grenzlinie G in Fig. 3), desto mehr in der Seihzone und desto weniger in der Presszone entwässert wird. Das Verhältnis Filtrat aus der Seihzone:Filtrat aus der Presszone nimmt mit zunehmender Flockungsmittelkonzentration zu. Im Zusammenhang mit der Erreichung eines optimalen Durchsatzes hat dies zur Folge, dass der Schlamm in nässerem Zustand die Presszone erreicht und dementsprechend leichter seitlich ausfliesst.

Bei einer Siebbandpresse ist es erforderlich, dass das Filtrat eine vorschriftsgemässe Reinheit aufweist. Es konnte nun festgestellt werden, dass die Reinheit des Filtrats indirekt durch eine Messung der Sauberkeit des Bandes nach der Presszone PZ, d.h. wenn der Kuchen entfernt worden ist, festgestellt werden kann. Hierzu wird jedes Band mittels einer Strahlenquelle 33, 34, siehe Fig. 1, durchstrahlt und die Absorption der Strahlung gemessen, die ein Mass für die Sauberkeit des Bandes darstellt.

## Patentansprüche

1. Verfahren zur Betriebsführung einer Siebbandpresse zum Filtern einer Trübe, insbesondere von Schlamm, mit zwei übereinander geführten Siebbändern, von denen durch das untere Siebband eine Seihzone und daran anschliessend durch beide Siebbänder eine Presszone gebildet werden, wobei der Antrieb der Siebbänder, der Zufluss der Trübe, sowie die Flockungsmittelzugabe und die Bandspannung sowie der Siebbandliniendruck einstellbar und/oder regelbar ausgebildet sind, dadurch gekennzeichnet, dass für die Optimierung des Trockenstoffgehaltes des Filterkuchens und des Flockungsmittelzuflusses die Flockungsmittelmenge im Ueberflockungsbereich nur soweit verringert wird, dass das Niveau der Trübe am Anfang der Seihzone noch stabilisiert ist.

2. Verfahren nach Anspruch 1, dadurch gekennzeichnet, dass der Trockenstoffgehalt des Filterkuchens und der Flockungsmittelzufluss durch eine Niveaumessung am Anfang der Seihzone optimiert wird, wobei die zeitliche Aenderung des Niveaus gemessen wird.

3. Verfahren nach Anspruch 1 oder 2, dadurch gekennzeichnet, dass zur Betriebsoptimierung der Siebbandpresse die Optimierung des Flockungsmittelzuflusses durch den Flockungsmittelkreis mit der Optimierung einer oder mehrerer der Grössen:Siebbandgeschwindigkeit, Siebbandspannung und Siebbandliniendruck kombiniert wird.

4. Verfahren nach Anspruch 3, dadurch gekennzeichnet, dass die Bandspannung und/oder der Liniendruck der Siebbänder durch die Einstellung eines oder mehrerer ihrer Grenzwerte: maschinenbedingte Grenze, seitlicher Begrenzungsrand des Filterkuchens unmittelbar vor dem Ausfliessen und Sollwert der Reinheit des Filtrats optimiert werden.

5. Verfahren nach Anspruch 4, dadurch gekennzeichnet, dass zur Vermeidung des Ausfliessens des Filterkuchens die Aenderung des vom Filterkuchen auf die Bänder ausgeübten Druckes durch einen in der Nähe des Randes eines Bandes senkrecht zur Bandfläche angeordneten, einen Vordruck auf das Band ausübenden Taster festgestellt wird, wenn der am Taster eingestellte Vordruck durch das seitliche Ausbreiten des Filterkuchens um einen bestimmten Betrag vergrössert wird.

6. Verfahren nach Anspruch 3 oder 4, dadurch gekennzeichnet, dass die Bandgeschwindigkeit der Siebbänder mittels einer Messung des Trockenstoffgehaltes optimiert wird.

7. Verfahren nach Anspruch 5, dadurch gekennzeichnet, dass der Trockenstoffgehalt des Filterkuchens spektrometrisch mit Infrarot, an der Austrittsstelle der Siebbänder gemessen wird, wobei der ganze Filterkuchen auf das untere Siebband gelenkt wird.

8. Verfahren nach Anspruch 3 oder 4, dadurch gekennzeichnet, dass die Reinheit des Filtrats indirekt durch die Sauberkeit des Bandes nach der Entfernung des Filterkuchens von den Siebbändern am Ende der Presszone gemessen wird.

9. Verfahren nach Anspruch 8, dadurch gekennzeichnet, dass die Sauberkeit des Siebbandes durch die Messung einer Strahlung festgestellt wird.

## Claims

1. Method of regulating and optimising the operation of a sieve belt press for filtering a pulp, particularly of sludge, with two sieve belts guided one over another of which a straining zone is formed by the lower sieve belt and adjacent thereon a pressing zone is formed by both sieve belts, wherein the drive of the sieve belts, the feed of the pulp as well as the feed of flocculating agent and the belt tension as well as the sieve belt lineal pressure, are constructed adjustably and/or controllably, characterised in that for the optimisation of the solids content of the filter cake and of the feed of flocculating agent the quantity of flocculating agent in the flocculating region is diminished only to such an extent that the level of the pulp at the beginning of the straining zone is still stabilised.

2. Process according to Claim 1, characterised in that the solids content of the filter cake and the feed of flocculating agent is optimised by a level measurement at the beginning of the straining zone, wherein the change of th elevel with time is measured.

3. Process according to Claim 1 or 2, characterised in that for optimising the operation of the sieve belt press, the optimisation of the flocculating agent feed through the flocculating agent feed through the flocculating agent circuit is combined with the optimisation of one or more of the quantities: sieve belt speed, sieve belt tension and sieve belt lineal pressure.

4. Process according to Claim 3, characterised in that the belt tension and/or the lineal pressure of the sieve belts is optimised by the adjustment of one or several of its limiting values: machine determined limits, lateral limiting edge of the filter cake directly before the outflow and desired value of the purity of the filtrate.

5. Process according to Claim 4, characterised in that for avoiding the flowing out of the felter cake, the change of the pressure exerted by the filter cake on the belts is determined by a feeler, arranged in the neighborhood of the edge of a belt perpendicular to the belt surface exerting a bias on the belt, if the bias set at the sensor is increased by the lateral spreading out of the filter cake by a given amount.

6. Process according to Claim 3 or 4, characterised in that the belt speed of the sieve belts is optimised by means of a measurement of the solids content.

7. Process according to Claim 5, characterised in that the solids content of the filter cake is measured spectrometrically with infrared radiation at the exit position of the sieve belts, wherein the entire filter cake is turned on to the lower sieve belt.

8. Process according to Claim 3 or 4, characterised in that the purity of the filtrate is measured indirectly by the cleanness of the belt after removal of the filter cake from the sieve belts at the end of the pressing zone.

9. Process according to Claim 8, characterised in that the cleanliness of the sieve belt is determined by the measurement of a radiation.

## Revendications

1. Procédé de conduite du fonctionnement d'un filtre-presse à bande destiné à la filtration d'un liquide trouble, en particulier de boues, comportant deux bandes filtrantes guidées l'une au-dessus de l'autre, dont la bande filtrante inférieure forme une zone de filtration, et les deux bandes filtrantes forment ensuite une zone de pressage, l'entraînement des bandes filtrantes, l'arrivée du liquide trouble, ainsi que l'addition de floculants et la tension des bandes, ainsi que la pression linéaire des bandes filtrantes étant réglables et/ou ajustables caractérisé en ce que pour optimiser la teneur en matière sèche du gâteau de filtration et l'arrivée de floculants, la quantité de floculants dans le domaine de surfloculation n'est réduite que d'une quantité suffisante pour que le niveau du liquide trouble soit encore stabilisé au début de la zone de filtration.

2. Procédé selon la revendication 1, caractérisé en ce que la teneur en matière sèche du gâteau de filtratioin et l'arrivée de floculants sont optimisées par une mesure de niveau au début de la zone de filtration, la variation du niveau dans le temps étant mesurée.

3. Procédé selon la revendication 1 ou 2, caractérisé en ce que pour optimiser le fonctionnement du filtre-presse à bande, l'optimisation de l'arrivée de floculants par le circuit de floculants est associée à l'optimisation d'une ou de plusieurs des grandeurs suivantes: vitesse des bandes filtrantes, tensioin des bandes filtrantes et pression linéaire des bandes filtrantes.

4. Procédé selon la revendication 3, caractérisé en ce que la tensioin de bande et/ou la pression linéaire des bndes filtrantes sont optimisées par le réglage d'une ou de plusierus de leurs valeurs limites: limite donnée par la machine, bord de délimitation latéral du gâteau de filtration immédiatement avant l'écoulement, et valeur de consigne de la pureté du filtrat.

5. Procédé selon la revendication 4, caractérisé en ce que pour éviter l'écoulement du gâteau de filtration, la variation de la pression exercée par le gâteau de filtration sur les bandes est constatée par un palpeur placé à proximité du bord d'une bande, perpendiculairement à sa surface, et exerçant une presson initiale sur la bande, lorsque la pression initiale, sur laaquelle est réglé le palpeur, augmente d'une certaine valeur du fait de l'étalement latéral du gâteau de filtration.

6. Procédé selon la revendication 3 ou 4, caractérisé en ce que la vitesse des bandes filtrantes est optimisée par une mesure de la teneur en matière sèche.

7. Procédé selon la revendication 5, caractérisé en ce que la teneur en matière sèche du gâteau de filtration est mesurée au moyen d'un spectromètre à infrarouge, à la sortie des bandes de filtration, la totalité du gâteau de filtration àtant dirigée vers la bande filtrante inférieure.

8. Procédé selon la revendication 3 ou 4, caractérisé en ce que la pureté du filtrat est mesurée indirectement par la propreté de la bande après enlèvement du gâteau de filtration des bandes filtrantes, à l'extrémité de la zone de pressage.

9. Procédé selon la revendication 8, caractérisé en ce que la propreté de la bande filtrante est constatée par mesure d'un rayonnement.

FIG. 1

FIG. 2

FIG. 3

FIG. 4

BS = const.
FK = const.

FIG. 5

$$\int_0^{To} F = f(1/S)$$

FIG. 6

Q = const.
FK = const.

FIG. 7